# EUROPÄISCHE PATENTANMELDUNG

(11) **EP 0 845 541 A2**
(43) Veröffentlichungstag der Anmeldung: **03.06.1998**
(21) Anmeldenummer: 98101001.0
(22) Anmeldetag: 12.10.1995
(51) Int. Cl.: C21B 13/00, C21B 13/14

(54) **Anlage und Verfahren zur Herstellung von Roheisen und/oder Eisenschwamm**

(30) Priorität: 17.10.1994 AT 1958/94
(62) Teilanmeldung aus: 95933227.1
(71) Anmelder: VOEST-ALPINE INDUSTRIEANLAGENBAU GMBH, 4020 Linz (AT)
(72) Erfinder: Kepplinger, Leopold Werner, 4060 Leonding (AT); Milionis, Konstantin, 8413 St. Georgen a/d Stiefling 122 (AT); Siuka, Dieter, 4501 Neuhofen (AT); Wiesinger, Horst, 4020 Linz (AT)
(74) Vertreter: Kopecky, Helmut, Dipl.-Ing. Kopecky & Schwarz Patentanwälte

(57) **Zusammenfassung**

Bei einer Anlage zur Anlage zur Herstellung von Roheisen und/oder Eisenschwamm, mit mindestens einem Wirbelbettreaktor (1, 2) zur Aufnahme von Feinerz, einer Reduktionsgas-Zuleitung (7) zu diesem Wirbelbettreaktor (1, 2), einer Abgas-Ableitung (8) aus dem Wirbelbettreaktor (1) und einer Austragsvorrichtung (17), vorzugsweise einer Brikettiereinrichtung (6), für das im Wirbelbettreaktor (1, 2) gebildete Reduktionsprodukt, mündet die Abgas-Ableitung (8) des Wirbelbettreaktors (1) in eine Reinigungseinrichtung, wie einen Wäscher (9), nachfolgend in eine Heizeinrichtung (12, 13) und schließlich in die Reduktionsgas-Zuleitung (7) des Wirbelbettreaktors (1, 2).

Um ein Produkt mit einem hohen Qualitätsstandard mit minimaler Energieeinbringung zu schaffen, ist die Heizeinrichtung zweistufig ausgebildet und ist als Heizeinrichtung für das Reduktionsgas ein Wärmetauscher (12) und in Serie dazu eine Teilverbrennungseinrichtung (13) für das Reduktionsgas mit einer Sauerstoffzuführung (16) vorgesehen.

## Beschreibung

Die Erfindung betrifft Anlage zur Herstellung von Roheisen und/oder Eisenschwamm, mit mindestens einem Wirbelbettreaktor zur Aufnahme von Feinerz, einer Reduktionsgas-Zuleitung zu diesem Wirbelbettreaktor, einer Abgas-Ableitung aus dem Wirbelbettreaktor und einer Austragsvorrichtung, vorzugsweise einer Brikettiereinrichtung, für das im Wirbelbettreaktor gebildete Reduktionsprodukt, wobei die Abgas-Ableitung des Wirbelbettreaktors in eine Reinigungseinrichtung, wie einen Wäscher, nachfolgend in eine Heizeinrichtung und schließlich in die Reduktionsgas-Zuleitung des Wirbelbettreaktors mündet. Weiters betrifft die Erfindung ein Verfahren zur Herstellung von Roheisen und/oder Eisenschwamm unter Verwendung dieser Anlage.

Die Verarbeitung von Feinerz zu Eisenschwamm in einem Wirbelbettreaktor ist dem Prinzip nach aus der US-A - 5,082,251 bekannt. Hierbei wird das Reduktionsgas durch katalytische Reformierung von entschwefeltem und vorgewärmtem Erdgas mit überhitztem Wasserdampf in einem Reformerofen erzeugt. Dieses Verfahren ermöglicht die Herstellung von Eisenschwamm hoher Qualität aus Feinerz.

Der Erfindung liegt die Aufgabe zugrunde, eine Anlage der eingangs beschriebenen Art so zu verbessern, daß das erzeugte Produkt, Roheisen und/oder Eisenschwamm, unter minimaler Energieeinbringung einem hohen Qualitätsstandard entspricht, insbesondere einen hohen Metallisierungsgrad und Reinheitsgrad aufweist, so daß eine problemlose Weiterverarbeitung sichergestellt ist.

Diese Aufgabe wird bei einer Anlage der eingangs beschriebenen Art dadurch gelöst, daß die Heizeinrichtung zweistufig ausgebildet ist und daß als Heizeinrichtung für das Reduktionsgas ein Wärmetauscher und in Serie dazu eine Teilverbrennungseinrichtung für das Reduktionsgas mit einer Sauerstoffzuführung vorgesehen sind.

Vorteilhaft ist in der Reduktionsgas-Zuleitung des Wirbelbettreaktors eine CO₂-Entfernungsanlage zur Verringerung des CO₂-Gehaltes des im Wirbelbettreaktor gebildeten Abgases vorgesehen.

Das erfindungsgemäße Verfahren zur Herstellung von Roheisen und/oder Eisenschwamm ist dadurch gekennzeichnet, daß Feinerz in einer Wirbelbett-Direktreduktionszone im Wirbelbett-Verfahren mit Reduktionsgas zu Eisenschwamm reduziert wobei der Wirbelbett-Direktreduktionszone in der Wirbelbett-Direktreduktionszone entstehendes gereinigtes Abgas als Ergänzung zu frisch zugeführtem Reduktionsgas zugeführt wird und daß der Wirbelbett-Direktreduktionszone zugeführtes Abgas, vorzugsweise gemeinsam mit frisch zugeführtem Reduktionsgas, zweistufig erhitzt wird, u.zw. in einer ersten Stufe durch Wärmetausch und in einer zweiten Stufe durch Teilverbrennung mit Hilfe von in zumindest eine Teilmenge des Reduktionsgases eingeleitetem Sauerstoff.

Um den CO₂-Gehalt des der Wirbelbett-Direktreduktionszone zugeführten Reduktionsgases auf das gewünschte Ausmaß zu reduzieren, wird zweckmäßig das Abgas aus der Wirbelbett-Direktreduktionszone einer CO₂-Entfernung unterworfen.

Vorteilhaft wird das frisch zugeführte Reduktionsgas der Wirbelbett-Direktreduktionszone unter Umgehung der CO₂-Entfernung der Wirbelbett-Direktreduktionszone zugeführt.

Die Direktreduktion im Wirbelbett-Verfahren kann zwei- oder mehrstufig durchgeführt werden, wie dies beispielsweise aus der US-A - 5,082,251 bekannt ist. Weiters ist es möglich, die Direktreduktion mit Hilfe eines zirkulierenden Wirbelbettes durchzuführen, das beispielsweise aus der EP-B - 0 364 865 bekannt ist.

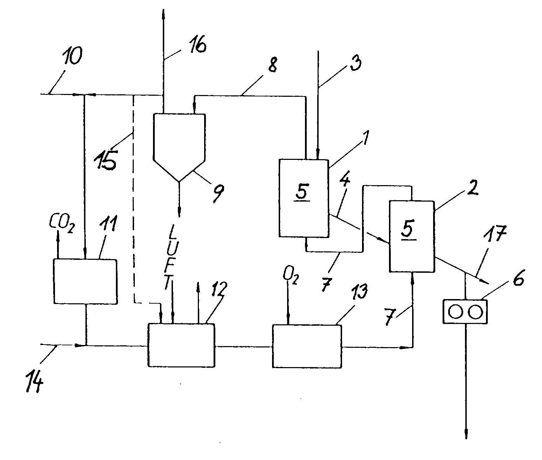

Die Erfindung ist nachfolgend anhand eines in der Zeichnung schematisch dargestellten Ausführungsbeispieles näher erläutert, wobei die in der Zeichnung dargestellte Figur das Verfahrensschema einer erfindungsgemäßen Anlage veranschaulicht.

Die Anlage weist zwei in Serie hintereinander geschaltete Wirbelbettreaktoren 1, 2 auf wobei Feinerz über eine Feinerz-Zuleitung 3 dem ersten Wirbelbettreaktor 1 und von diesem über eine Förderleitung 4 zum nachgeordneten Wirbelbettreaktor 2 geleitet wird. Das in den Wirbelbettreaktoren 1, 2 in jeweils einer Wirbelbett-Direktreduktionszone 5 fertigreduzierte Material (Eisenschwamm) wird nach Austritt aus dem zweiten Wirbelbettreaktor 2 einer Brikettieranlage 6 zugeführt, wo es heiß- oder kaltbrikettiert wird. Vor Einleitung des Feinerzes in den ersten Wirbelbettreaktor 1 wird es einer Erzvorbereitung, wie einer Trocknung, unterzogen, was jedoch nicht näher dargestellt ist.

Reduktionsgas wird im Gegenstrom zum Erzdurchfluß vom Wirbelbettreaktor 2 zum Wirbelbettreaktor 1, d.h. zu den in den Wirbelbettreaktoren 1 und 2 vorgesehenen Wirbelbett-Direktreduktionszonen 5, über die Gasleitung 7 geführt und als Abgas über eine Abgas-Ableitung 8 aus dem in Erzflußrichtung ersten Wirbelbettreaktor 1 abgeleitet.

Das aus dem Wirbelbettreaktor 1 abgezogene Abgas wird in einer vorzugsweise als Naßwäscher ausgebildeten Reinigungseinrichtung 9 gekühlt und gewaschen und nachfolgend durch Zusammenmünden mit einer frisches Reduktionsgas zuführenden Reduktionsgas-Zuleitung 10 und der Abgas-Ableitung 8 mit dem frisch zugeleiteten Reduktionsgas vermischt. Dieses so gebildete Mischgas wird durch eine vorzugsweise als CO₂-Wäscher ausgebildete CO₂-Entfernungsanlage 11 hindurchgeschickt und von CO₂ befreit. Anschließend erfolgt eine zweistufige Aufheizung des Mischgases in einem Wärmetauscher 12 auf ca. 400°C. Diesem nachgeordnet ist eine Nachverbrennungseinrichtung 13, in der ein Teil des Mischgases unter Sauerstoffzuführung verbrannt wird, wodurch das Mischgas die für die Direktreduktion in den Wirbelbettreaktoren 1, 2 erforderliche Temperatur bis zu ca. 850°C erreicht. Dieses aufgeheizte Mischgas steht nunmehr den Wirbelbettreaktoren 1, 2 als Reduktionsgas zur Verfügung.

Gemäß einer bevorzugten Ausführungsform wird lediglich das Abgas der Wirbelbettreaktoren 1, 2 einer CO₂-Wäsche unterzogen und das über eine Leitung 14 frisch zugeleitete Reduktionsgas erst nach der CO₂-Wäsche des Abgases mit diesem vermischt.

Der brikettierte Eisenschwamm wird in einem Kompakthüttenwerk, beispielsweise ausgestattet mit Elektroöfen und Konvertern, verarbeitet. Falls erforderlich, kann brikettierter Eisenschwamm auch in einen Einschmelzvergaser über eine Fördereinrichtung eingebracht und dort eingeschmolzen werden. Dies ist insbesondere dann von Vorteil, wenn in einem. Einschmelzvergaser überschüssige Energie zur Verfügung steht.

Der Wärmetauscher 12 wird vorteilhaft mit einem Teil des Abgases der Wirbelbettreduktion, das über eine Leitung 15 zugeführt wird, betrieben. Für den Reduktionsprozeß bzw. den Wärmetauscher 12 nicht benötigtes Abgas wird über eine Exportgas-Ableitung 16 anderen Verbrauchern zugeführt. Die Ableitung 16 mündet vorteilhaft in einen Gas-Sammelbehälter, wie einen Gasometer, zur Zwischenspeicherung des Exportgases. Damit können in vorteilhafter Weise unterschiedliche Gasproduktionen und Druckschwankungen im System abgefangen und ausgeglichen werden.

Anstelle der Brikettieranlage 6 kann auch eine Austragvorrichtung 17, wie z.B. ein Kaltaustragsystem, vorgesehen sein.

Sämtliche Fördereinrichtungen bzw. Gasleitungen sind mit Regelorganen bzw. Verdichtem (Kompressoren) in üblicher Weise ausgestattet.

### Beispiel:

Bei dem in den Wirbelbettreaktor 1 chargierten Feinerz handelt es sich um Erz mit einer maximalen Korngröße von 8 mm. Es wird zu Eisenschwamm reduziert, u.zw. in zwei Stufen, und anschließend heißbrikettiert wird. Der heißbrikettierte Eisenschwamm weist einen Metallisierungsgrad (Feₘₑₜ/Fe_{ges}) von 92 % auf.

Das in die Wirbelbettreaktoren 1, 2 eingeführte Reduktionsgas wird durch Mischen eines aus einem Reduktions-Schachtofen zur Direktreduktion von Stückerz dienenden abgezogenen Topgases mit einem Teil des aus dem in Fließrichtung des Feinerzes erstgelegenen Wirbelbettreaktor 1 abzogenen Abgases gebildet. Dieses Abgas fällt in einer Menge von 189.766 Nm³/h an und weist die nachstehende chemische Zusammensetzung auf.

**Tabelle I**

| | |
|---|---|
| CO [%] | 41,41 |
| CO₂ [%] | 25,28 |
| H₂ [%] | 17,10 |
| H₂O [%] | 1,50 |
| H₂S ppm | 22,31 |
| CH₄ [%] | 3,50 |
| N₂,Ar [%] | 11,21 |

Sein Heizwert beträgt 8.337 kJ/Nm³. Von diesem Abgas werden 20.905 Nm³ als Exportgas über die Exportgas-Ableitung 16 für andere Verwendungszwecke abgezweigt. 151.000 Nm³/h des Abgases werden mit dem aus dem Reduktions-Schachtofen abgezogenen Topgas vermischt, u.zw. nachdem sowohl das Topgas als auch das Abgas einer Naßwäsche unterzogen wurden.

Das so gebildete Mischgas (311.000 Nm³/h) weist einen Heizwert von 7.873 kJ/Nm³ auf. Seine chemische Zusammensetzung ist wie folgt:

**Tabelle II**

| | |
|---|---|
| CO [%] | 41,87 |
| CO₂ [%] | 30,73 |
| H₂ [%] | 16,43 |
| H₂O [%] | 1,89 |
| H₂S ppm | 75,14 |
| CH₄ [%] | 2,24 |
| N₂,Ar [%] | 6,83 |

Nach dem CO₂-Waschen dieses Mischgases im CO₂-Wäscher 11 ist seine chemische Zusammensetzung wie folgt:

**Tabelle III**

| | |
|---|---|
| CO [%] | 61,34 |
| CO₂ [%] | 0,45 |
| H₂ [%] | 24,07 |
| H₂O [%] | 0,70 |
| H₂S ppm | 1,11 |
| CH₄ [%] | 3,32 |
| N₂,Ar [%] | 10,11 |

Seine Menge beträgt 210.140 Nm³/h und sein Heizwert liegt bei 11.547 kJ/Nm³. Das aus dem CO₂-Wäscher 11 abgeleitete, in der Hauptsache CO₂ enthaltende Gas fällt in einer Menge von 100.860 Nm³/h an. Seine chemische Zusammensetzung ist in nachstehender Tabelle IV wiedergegeben.

**Tabelle IV**

| | |
|---|---|
| CO [%] | 1,29 |
| CO₂ [%] | 93,81 |
| H₂ [%] | 0,51 |
| H₂O [%] | 4,37 |
| H₂S ppm | 229,38 |
| CH₄ [%] | 0,00 |
| N₂,Ar [%] | 0,00 |

Anschließend erfolgt eine Erwärmung des Mischgases in dem Wärmetauscher 12, indem aus dem Wirbelbettreaktor 1 über die Gasleitung 15 abgeleitetes Abgas in einer Menge von 17.861 Nm³/h verbrannt wird. Zu dieser Verbrennung ist eine Luftzuführung in einer Menge von 32.184 Nm³/h nötig.

In das so im Wärmetauscher 12 erwärmte Mischgas wird in der Nachverbrennungseinrichtung 13 Sauerstoff in einer Menge von 5.083 Nm³/h zugeführt, so daß eine Teilverbrennung des Mischgases stattfindet. Dieses nunmehr auf eine Temperatur von 820°C erhitzte Mischgas steht nunmehr als Reduktionsgas für die Direktreduktion des Feinerzes in den Wirbelbettreaktoren 1 und 2 zur Verfügung, u.zw. in einer Menge von 210.846 Nm³/h und mit einem Heizwert von 10.947 kJ/Nm³. Seine chemische Zusammensetzung ist in nachstehender Tabelle V angegeben.

**Tabelle V**

| | |
|---|---|
| CO [%] | 58,16 |
| CO₂ [%] | 3,60 |
| H₂ [%] | 22,82 |
| H₂O [%] | 2,19 |
| H₂S ppm | 1,11 |
| CH₄ [%] | 3,15 |
| N₂,Ar [%] | 10,09 |

## Patentansprüche

1. Anlage zur Herstellung von Roheisen und/oder Eisenschwamm, mit mindestens einem Wirbelbettreaktor (1, 2) zur Aufnähme von Feinerz, einer Reduktionsgas-Zuleitung (7) zu diesem Wirbelbettreaktor (1, 2), einer Abgas-Ableitung (8) aus dem Wirbelbettreaktor (1) und einer Austragsvorrichtung (17), vorzugsweise einer Brikettiereinrichtung (6), für das im Wirbelbettreaktor (1, 2) gebildete Reduktionsprodukt, wobei die Abgas-Ableitung (8) des Wirbelbettreaktors (1) in eine Reinigungseinrichtung, wie einen Wäscher (9), nachfolgend in eine zweistufige Heizeinrichtung (12, 13) und schließlich in die Reduktionsgas-Zuleitung (7) des Wirbelbettreaktors (1, 2) mündet, dadurch gekennzeichnet, daß die Heizeinrichtung zweistufig ausgebildet ist und daß als Heizeinrichtung für das Reduktionsgas ein Wärmetauscher (12) und in Serie dazu eine Teilverbrennungseinrichtung (13) für das Reduktionsgas mit einer Sauerstoffzuführung (16) vorgesehen sind.

2. Anlage nach Anspruch 1, dadurch gekennzeichnet, daß in der Reduktionsgas-Zuleitung (7) des Wirbelbettreaktors (1, 2) eine CO₂-Entfernungsanlage (11) vorgesehen ist.

3. Verfahren zur Herstellung von Roheisen und/oder Eisenschwamm mit einer Anlage nach einem der Ansprüche 1 oder 2, dadurch gekennzeichnet, daß Feinerz in einer Wirbelbett-Direktreduktionszone (5) im Wirbelbett-Verfahren mit Reduktionsgas zu Eisenschwamm reduziert wird, wobei der Wirbelbett-Direktreduktionszone (5) in der Wirbelbett-Direktreduktionszone (5) entstehendes gereinigtes Abgas als Ergänzung zu frisch zugeführtem Reduktionsgas zugeführt wird und daß der Wirbelbett-Direktreduktionszone (5) zugeführtes Abgas, vorzugsweise gemeinsam mit frisch zugeführtem Reduktionsgas, zweistufig erhitzt wird, u.zw. in einer ersten Stufe (12) durch Wärmetausch und in einer zweiten Stufe (13) durch Teilverbrennung mit Hilfe von in zumindest eine Teilmenge des Reduktionsgases eingeleitetem Sauerstoff.

4. Verfahren nach Anspruch 8 oder 9, dadurch gekennzeichnet, daß das Abgas aus der Wirbelbett-Direktreduktionszone (5) einer CO₂-Entfernung unterworfen wird.

5. Verfahren nach einem der Ansprüche 3 oder 4, dadurch gekennzeichnet, daß das frisch zugeführte Reduktionsgas der Wirbelbett-Direktreduktionszone (5) unter Umgehung der CO₂-Entfernung (11) des aus der Wirbelbett-Direktreduktionszone (5) stammenden Abgases zugeführt wird.

6. Verfahren nach einem oder mehreren der Ansprüche 3 bis 5, dadurch gekennzeichnet, daß die Direktreduktion im Wirbelbett-Verfahren (5) zwei- oder mehrstufig durchgeführt wird.
